# NEW EUROPEAN PATENT SPECIFICATION

(11) **EP 0 189 230 B2**
(45) Date of publication and mention of the opposition decision: **03.11.1993**
(45) Mention of the grant of the patent: 18.07.1990
(21) Application number: 86200077.5
(22) Date of filing: 17.01.1986
(51) Int. Cl.: G01F 1/84

(54) **A fuel flow meter and a fuel supply system**
Kraftstoffdurchflussmesser und Kraftstoffversorgungssystem
Débitmètre pour combustibles et système d'alimentation en combustible

(30) Priority: 17.01.1985 NL 8500112
(43) Date of publication of application: 30.07.1986
(73) Proprietor: Techno Fysica B.V., 2991 LK Barendrecht (NL)
(72) Inventor: Kloppenburg, Pieter, NL-3142 LH Maassluis (NL)
(74) Representative: Konings, Lucien Marie Cornelis Joseph

(56) References cited:
- EP-A- 0 083 144
- DE-C- 175 697
- GB-A- 1 561 110
- JP-A-58 178 217
- US-A- 2 865 201
- US-A- 3 970 334
- US-A-41 095 24

## Description

The present invention relates to a mass flow meter according to claim 1.

A mass flow meter as such is known from EP-A-83144. This known flow meter is used for measuring mass flow by means of an oscillating conduit. This oscillating movement of the conduit is sensitive to disturbing forces from the environment.

Further a mass flow meter is known from JP-A-58 178217 in which. The effect of external vibrations is reduced by flexible O-rings. There is, however, no indication of using such mass flow meter on board a skip.

An object of the present invention is providing a relatively accurate fuel supply system, by means of which measurements can be made independent of the specific gravity of the flowing fluid, and which can be used in a vibrational environment.

In known fuel meters at ships conventionally there is measured the fuel volume flowing through the meter. Because of the specific mass of the used fuels often not being known accurately, it is not possible to determine accurately the mass flow and thus the energy consumption of a ship diesel engine with such a fuel meter.

The system according to claim 1 is suited for accurately measuring fuel consumed by a ship, substantially independent of the specific mass of the fuel.

From US-A-4,109,524 and EP-A-83144 there are known mass flow meters These mass flow meters use an oscillation generator for generating torque by means of Coriolis force in a loop-shaped or curved conduit in the resonance area of about 70 Hz, being common for the loop-shaped or curved conduit and a carrier of the oscillating generator. By picking up a parameter, e.g. the position or velocity of the loop-shaped or curved conduit, of the oscillation the mass flow is determined. Such a mass flow meter is not suited for an oscillating ship, the oscillations disturbing said oscillations generated in said loop-shaped or curved conduit. From many measurements it has appeared that if said mass flow meter is exposed to disturbing oscillations in a frequency area above 14 Hz, the relative error in measurement values is in the order of magnitude of 25%. So, the known mass flow meters are unemployable on a ship as ship fuel meter.

It is noted that as such spring means, for mounting of a housing, are known from DE-C-175, 697.

Further advantages details and characteristics of the invention will be described with reference to a drawing in which are:
Figure 1 a longitudinal section partly broken away of a fuel flow meter according to the invention;
Figure 2 a cross section partly broken away according to the line II-II of figure 1; and
Figure 3 a diagram of a fuel supply system according to the invention.

A preferred embodiment of a fuel flow meter 1 (figures 1 and 2) according to the invention has an input terminal 4 and an output terminal 7 each welded to covers 5 and 8 respectively of a housing 2, said covers being fixed with bolts 6. In the housing 2 there is arranged a measuring unit 9 oscillatingly insulated relative to a frame 3 carried by the housing 2, by means of rubber elements 10. A loop-shaped or curved conduit formed by a U-shaped tube 15 of the measuring unit 9 is coupled to the input terminal 4 and the output terminal 7 respectively through hoses 11 and 12 respectively, which are fixed with hose clips 13. In the lower part of the cover 5 there is provided a tap 14, so that there could be checked for possible leakage fluid without the danger of fuel passing into the engine room.

In Figure 1 there is shown diagrammatically the construction of the measuring unit 9. The mass flow to be measured flows through a U-shaped tube 15. On a U-shaped carrier 16 there is provided an oscillating generator 21 to generate oscillations of the U-shaped tube 15 relative to an axis M being perpendicular on an input leg 19 and an output leg 20 of said U-shaped tube. The integral of the U-shaped tube 15 and carrier 16 applied to a supporting part 17 has a resonance frequency of about 70 Hz and is brought into oscillation with 70 Hz by the oscillating generator 21. Because the carrier 16 and tube 15 are jogged with the same force in opposite directions, said supporting part 17 is not moved by the oscillating generator 21. If the U-shaped tube 15 is brought into oscillation by the oscillating generator 21 and there is passed a mass flow through the U-shaped tube 15, there will develop a torsion across a cross part 18 of the U-shaped tube 15 about an axis N extending perpendicularly in the centre of the cross part 18, because at the end 45 of the input leg 19 of the U-shaped tube 15 and the carrier 16 there will develop a force opposite to the force at the end 46 of the output leg 20 of the U-shaped tube 15, said forces and so the torsion across the cross part 18 of the U-shaped tube 15 changing their direction in the rhythm of the oscillation generated by the oscillating generator 21. By means 22 for picking up positions, e.g. magnetically, the position of the ends 45, 46 of the in put leg 19 and the output leg 20 respectively is determined, thus the torsion across the cross part 18 being proportional to the phase difference between the signals of the two position picking up means 22 and therewith the value of the mass flow flowing through the tube 15. The housing 2 is provided with an electrical terminal 23 supplying power to the oscillating generator 21 and said position picking up means 22 and supplying signals of the position picking up means 22 to an auxiliary apparatus 47 to determine and read out the mass flow flowing through the U-shaped tube 15.

It is noted that another parameter of the oscillation, e.g. the velocity of any part of the cross part 18 can be measured by some picking up means.

Said fuel flow meter 1 can be manufactured accurately, the measuring accuracy being maintained, when the fuel flow meter 1 is being exposed to disturbing oscillations occurring on for instance a ship, because of the measuring unit 9 being arranged insulated from ship oscillations relative to a housing 2 and thus of the ship itself. Further the fuel is not troubled by solid particles being in the fuel, as the case may be, or by high temperatures, if present. It is noted, that there is no trouble from changes in volume of the fuel caused by changes in temperature, because of the fuel flow meter 1 just measuring mass flow.

According to figure 2 the hoses 11 and 12 are curved in the transversal direction of the housing 2 as well, such that there is enough curving of these hoses.

It is noted, that instead of one tube 15 in combination with a carrier 16 there could be other constructions as well, for instance two U-shaped conduits both passed with fluid and oscillated relative to each other.

A preferred embodiment of the fuel supply system 24 according to the invention (figure 3) is constituted by two fuel tanks 25, 26 for fuel oil, heavy and less heavy respectively. The tanks 25, 26 are coupled to a pump 31 safeguarded by a pressure controller 32 and connected to the fuel flow meter 1, through valves 27, 28 respectively, a three-way connection 29 and a valve 30. A pressure controller 33 on the output side of the fuel flow meter 1 is coupled to a mix chamber 35 through a valve 34. The mix chamber 35 is coupled to the engine 38 through a booster pump 36 and an injection pump 37. The fuel coming from the fuel flow meter 1 is mixed with fuel returning from the engine 38 in the mix chamber 35, said returning fuel in certain cases being a high percentage of the supplied fuel. The mix chamber 35 is being kept at constant pressure by the pressure controller 33. Because of the mix chamber 35 receiving said returning fuel and staying at constant level, it is sufficient to use one fuel flow meter 1.

Further the fuel supply system 24 is provided with a bypass 40 for the fuel flow meter 1, a valve 41 of which is opened when a defect occurs at the fuel flow meter 1. Said bypass 40 can also be used in a direction opposite to arrow 42 for testing the fuel flow meter 1.

The mix chamber 35 is provided with an overflow conduct43 provided with a degasser44 and returning fuel to the tank 25 in case of erroneously overflowing of the mix chamber 35.

In dependency of the routing plan the engine 38 is fed with heavy or less heavy fuel oil. With the aid of the fuel supply system 24 and the fuel flow meter 1 it is possible to accurately determine the fuel mass consumed by the engine 38 and therewith the energy consumed, it being possible with said information together with accurate propulsion yield information to choose an optimum ship velocity in dependency on the weather conditions, the roughness of the sea, the propulsion yield and velocity requirements for supplying transported goods.

## Claims

1. A fuel supply system (24) comprising at least one fuel tank (25), at least one pump (31, 36, 37), conduits and means (32) for controlling pressure, said system using a mass flow meter (1) on board of a ship, said mass flow meter (1) comprising a measuring unit (9) including at least one substantially loop shaped conduit (15), at least one oscillating generator (21) for generating an oscillation of said loop shaped conduit (15) and means (22) for picking up a parameter, particularly one or more positions of the oscillation of said loop shaped conduit, wherein said measuring unit is mounted in and relative to a housing (2) against disturbing oscillations by resilient means (10) and is respectively connected through flexible conduits (11, 12) to an input terminal (4) and an output terminal (7), both provided in the housing (2).

## Patentansprüche

1. Betriebsstoffliefersystem (24) mit wenigstens einem Betriebsstoffbehälter (25), wenigstens einer Pumpe (31, 36, 37), sowie Leitungen und Mitteln (23) zur Druckregelung, wobei das System einen Mengenflußmesser (1) an Bord eines Schiffes aufweist und der Mengenflußmesser versehen ist mit einer Meßeinrichtung (9), welche mindestens eine im wesentlichen schleifenförmige Leitung (15) aufweist, einem Oszillationsgenerator (21) zum Oszillieren der schleifenförmigen Leitung (15), sowie Mitteln (22) zum Aufnehmen eines Parameters, insbesondereeinerodermehrerer Stellungen der oszillierenden schleifenförmigen Leitung (15), wobei die Meßeinrichtung innerhalb eines Gehäuses (2) mit Hilfe von federnden Mitteln (10) gegen Störschwingungen geschützt montiert ist und über biegsame Leitungen (11, 12) an einem Eingangsanschluß (4) und an einem Ausgangsanschluß (7) angeschlossen ist, die beide in dem Gehäuse (2) angeordnet sind.

## Revendications

1. Dispositif d'alimentation en combustible (24), comprenant au moins un réservoir à combustible (25), au moins une pompe (31, 36, 37), des conduits et des moyens (32) de réglage de la pression, ce dispositif comprenant un débitmètre massique (1) disposé à bord d'un navire, le débitmètre massique (1) comprenant un ensemble de mesure (9) qui comporte au moins un conduit (15) ayant pratiquement une forme de boucle, au moins un générateur (21) d'une oscillation du conduit (15) en forme de boucle, et des moyens (22) destinés à capter un paramètre, notamment une ou plusieurs positions d'oscillation du conduit en forme de boucle, dans lequel l'ensemble de mesure est monté dans un carter (2) et sur celui- ci par un dispositif élastique (10) de protection contre les oscillations perturbatrices, et est raccordé par des conduits souples (11, 12) respectivement à un organe d'entrée (4) et à un organe de sortie (7) qui sont tous deux placés dans le carter (2).
